# EUROPÄISCHE PATENTANMELDUNG

(11) **EP 1 202 031 A1**
(43) Veröffentlichungstag der Anmeldung: **02.05.2002**
(21) Anmeldenummer: 00123048.1
(22) Anmeldetag: 24.10.2000
(51) Int. Cl.: G01F 1/58, G01F 25/00

(54) **Verfahren und Vorrichtung zur Prozessüberwachung bei einem magnetisch-induktiven Sensor**

(71) Anmelder: Endress + Hauser Flowtec AG, CH-4153 Reinach BL 1 (CH)
(72) Erfinder: Budmiger,Thomas, 4107 Ettingen (BL) (CH)
(74) Vertreter: Andres, Angelika

(57) **Zusammenfassung**

Die Erfindung betrifft ein Verfahren und eine Vorrichtung (1) zur System- und Prozeßüberwachung bei einem magnetisch-induktiven Sensor, wobei ein Meßrohr (2) von einem Medium (6) im wesentlichen in Richtung der Meßrohrachse (5) durchflossen wird, wobei ein Magnetfeld das Meßrohr (2) im wesentlichen senkrecht zur Meßrohrachse (5) durchsetzt, wobei in zumindest eine im wesentlichen senkrecht zur Meßrohrachse (5) angeordneten Meßelektrode (3; 4) eine Meßspannung induziert wird und wobei die induzierte Meßspannung bzw. die Meßdaten Information über den Volumenstrom des Meßmediums (6) in dem Meßrohr (2) liefert.

Der Erfindung liegt die Aufgabe zugrunde, ein Verfahren und eine Vorrichtung vorzuschlagen, die zusätzlich zur Bestimmung des Volumenstroms eine Erkennung der Änderung einer System- und/oder einer Prozeßgröße erlauben.

Die Aufgabe wird hinsichtlich des Verfahrens dadurch gelöst, daß die Meßdaten über einen vorgegebenen Zeitraum bestimmt und gespeichert werden, daß die Ist-Meßdaten mit vorgegebenen Soll-Meßdaten verglichen werden und daß eine Meldung ausgegeben wird, wenn eine Abweichung zwischen den Ist-Meßdaten und den Soll-Meßdaten auftritt.

## Beschreibung

Die Erfindung bezieht sich auf ein Verfahren und eine Vorrichtung zur System- und Prozeßüberwachung bei einem magnetisch-induktiven Sensor, wobei ein Meßrohr von einem Medium im wesentlichen in Richtung der Meßrohrachse durchflossen wird, wobei ein Magnetfeld das Meßrohr im wesentlichen senkrecht zur Meßrohrachse durchsetzt, wobei in zumindest eine im wesentlichen senkrecht zur Meßrohrachse angeordneten Meßelektrode eine Meßspannung induziert wird und wobei die induzierte Meßspannung bzw. die Meßdaten Information über den Volumenstrom des Mediums in dem Meßrohr liefert bzw. liefern.

Aus der EP 0 814 324 B1 ist bereits eine Meßverstärkeranordnung für einen magnetisch-induktiven Durchflußmesser bekannt geworden. Um eine zuverlässige Aufbereitung der Meßelektrodensignale auch bei feststoffbelandenen, insbesondere einen hohen Feststoffanteil enthaltenden Fluiden, möglich zu machen, wobei auf eine Erhöhung des Spulenstroms verzichtet werden soll, wird in dieser Patentschrift folgende erfinderische Ausgestaltung vorgeschlagen: Jeder Meßelektrode ist eine Meßverstärkeranordung zugeordnet. Diese umfaßt einen eingangsseitig mit der Meßelektrode verbundenen Vorverstärker und einen dem Vorverstärker direkt nachgeschalteten A/D Wandler. Weiterhin ist ein Taktgenerator vorgesehen, der die A/D Wandler mit einem Abtastsignal speist, wobei die Taktfrequenz des Taktgenerators größer als ca. 1 kHz ist. Den A/D Wandlern ist ein Subtrahierer nachgeschaltet. Wie bereits gesagt, werden die ermittelten Meßelektrodensignale im Stand der Technik ausschließlich zur exakten Bestimmung des Volumenstroms in dem Meßrohr verwendet.

Der Erfindung liegt die Aufgabe zugrunde, ein Verfahren und eine Vorrichtung vorzuschlagen, die zusätzlich zur Bestimmung des Volumenstroms eine Erkennung der Änderung einer System- und/oder einer Prozeßgröße erlauben.

Bezüglich des Verfahrens wird die Aufgabe dadurch gelöst, daß die Ist-Meßdaten über einen vorgegebenen Zeitraum bestimmt und ggf. gespeichert werden, daß die Ist-Meßdaten mit entsprechenden vorgegebenen Soll-Meßdaten verglichen werden und daß eine Meldung ausgegeben wird, wenn eine Abweichung zwischen den Ist-Meßdaten und den Soll-Meßdaten auftritt. Die Ausgabe der Meldung kann akustisch und/oder optisch erfolgen.

Kurz gesagt, werden erfindungsgemäß die Spannungswerte an den Meßelektroden kontinuierlich oder intermittierend beobachtet. Hierdurch wird es möglich, frühzeitig eine verläßliche Aussage hinsichtlich einer Änderung einer System- und/oder Prozeßgröße zu machen. Sobald eine Änderung einer System- oder Prozeßgröße erkannt ist, kann ein hieraus resultierender Fehler bei der Volumenbestimmung des durch das Meßrohr fließenden Meßmediums effektiv eliminiert werden. Ebenso wird es möglich, einen Defekt an einer System- oder Prozeßkomponente zu erkennen und die defekte Komponente möglichst umgehend auszutauschen.

Gemäß einer vorteilhaften Weiterbildung des erfindungsgemäßen Verfahrens wird vorgeschlagen, daß eine Meldung an das Bedienpersonal nur dann ausgegeben wird, wenn die Ist-Meßdaten außerhalb vorgegebener Toleranzen um die Soll-Meßdaten liegen.

Eine bevorzugte Ausgestaltung des erfindungsgemäßen Verfahrens sieht vor, daß das Frequenzspektrum U(f) der in die Meßelektrode induzierten Spannungswerte für die System- und oder Prozeßüberwachung herangezogen wird. Hier wird also ganz allgemein eine Änderung des für ein System und/oder einen Prozeß charakteristischen Frequenzspektrums als Indiz dafür genommen, daß an einer System- bzw. Prozeßgröße eine unerwünschte Änderung eingetreten ist.

Alternativ ist vorgesehen, daß zumindest ein zuvor bestimmtes markantes Muster innerhalb des Frequenzspektrums, beispielsweise ein zu einem gegebenen Zeitpunkt bzw. bei einer gegebenen Frequenz auftretender Peak, für die System- und oder Prozeßüberwachung herangezogen wird. Beispielsweise kann der Peak von einer Zahnradpumpe herrühren. Ändert sich die Lage oder die Amplitude dieses Peaks, so ist dies ein klares Anzeichen für eine Änderung der herrschenden System- und/oder Prozeßbedingungen. Werden die Soll-Meßdaten darüber hinaus unter unterschiedlichen Bedingungen ermittelt, so läßt sich aus der Änderung auch ein Rückschluß darauf ziehen, welche der System- und/oder Prozeßgrößen sich geändert hat.

Bezüglich der erfindungsgemäßen Vorrichtung wird die Aufgabe dadurch gelöst, daß eine Auswerte-/Regeleinheit Ist-Meßdaten über einen vorgegebenen Zeitraum bestimmt und speichert, daß die Auswerte-/Regeleinheit die Ist-Meßdaten mit vorgegebenen Soll-Meßdaten vergleicht und daß die Auswerte-/Regeleinheit die Ausgabe einer Meldung veranlaßt, wenn eine Abweichung zwischen den Ist-Meßdaten und den Soll-Meßdaten auftritt.

Die Erfindung wird anhand der nachfolgenden Zeichnungen näher erläutert. Es zeigt:
Fig. 1: eine schematische Darstellung der erfindungsgemäßen Vorrichtung,
Fig. 2: eine Darstellung eines ersten Frequenzspektrums U(f) und
Fig. 3: eine Darstellung eines zweiten Frequenzspektrums U(f).

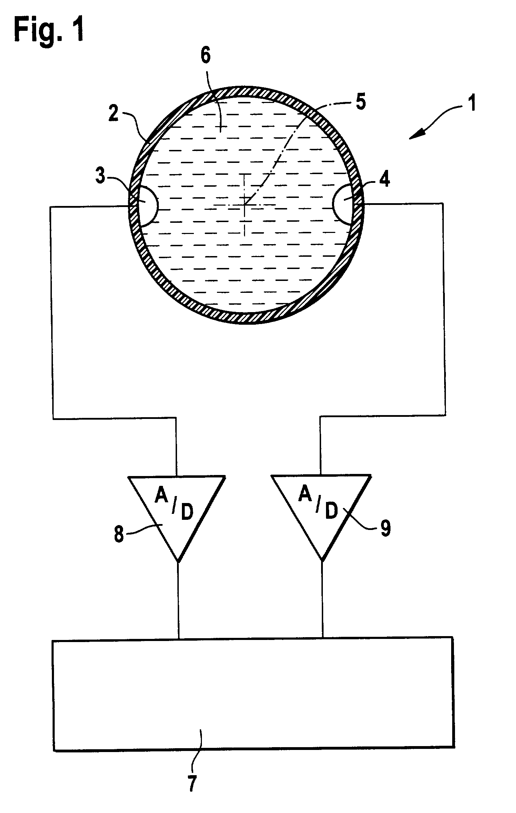

Fig. 1 zeigt eine schematische Darstellung einer Ausgestaltung der erfindungsgemäßen Vorrichtung 1. Das Meßrohr 2 des Sensors wird von dem Meßmedium 6 in Richtung der Meßrohrachse 5 durchflossen. Das Meßmedium 6 ist zumindest in geringem Umfang elektrisch leitfähig. Das Meßrohr 2 selbst ist aus einem nicht leitfähigen Material gefertigt, oder es ist zumindest an seiner Innenseite mit einem nicht leitfähigen Material ausgekleidet.

Infolge eines senkrecht zur Flußrichtung des Meßmediums 6 ausgerichteten Magnetfeldes, das von zwei in Fig. 1 nicht gesondert dargestellten, diametral angeordneten Elektromagneten erzeugt wird, wandern in dem Meßmedium 6 befindliche Ladungsträger zu der entgegengesetzt gepolten Meßelektrode 3, 4 ab. Die sich zwischen den beiden Meßelektroden 3, 4 aufbauende Spannung U ist proportional zu der über den Querschnitt des Meßrohres 2 gemittelten Strömungsgeschwindigkeit des Meßmediums 6, d. h. sie ist ein Maß für den Volumenstrom des Meßmediums 6 im Meßrohr 2. Das Meßrohr 2 ist übrigens über Verbindungselemente, die in der Zeichnung nicht gesondert dargestellt sind, mit einem Rohrsystem, durch das das Meßmedium 6 hindurchströmt, verbunden.

Im gezeigten Fall befinden sich die beiden Meßelektroden 3, 4 in direktem Kontakt mit dem Meßmedium 6; allerdings kann die Ankopplung auch kapazitiv erfolgen. Die Spannungswerte U, die an den Meßelektroden 3, 4 bevorzugt kontinuierlich ermittelt werden, werden in den A/D Wandlern 8, 9 digitalisiert. Die digitalen Werte werden zwecks Auswertung an die Auswerte/Regeleinheit 7 weitergeleitet. Bevorzugt berechnet die Auswerte-/Regeleinheit 7 aus den Spannungswerten das Frequenzspektrum. Entweder ermittelt die Auswerte-/Regeleinheit 7 auf System- und/oder Prozeßgrößen zurückgehende Änderungen anhand einer Langzeitstudie des Frequenzspektrums, oder sie greift sich markante Peaks aus dem Frequenzspektrum heraus und gibt eine Fehlermeldung auf, sobald Lage- und/oder Amplitudenänderungen vorgegebene Toleranzwerte überschreiten.

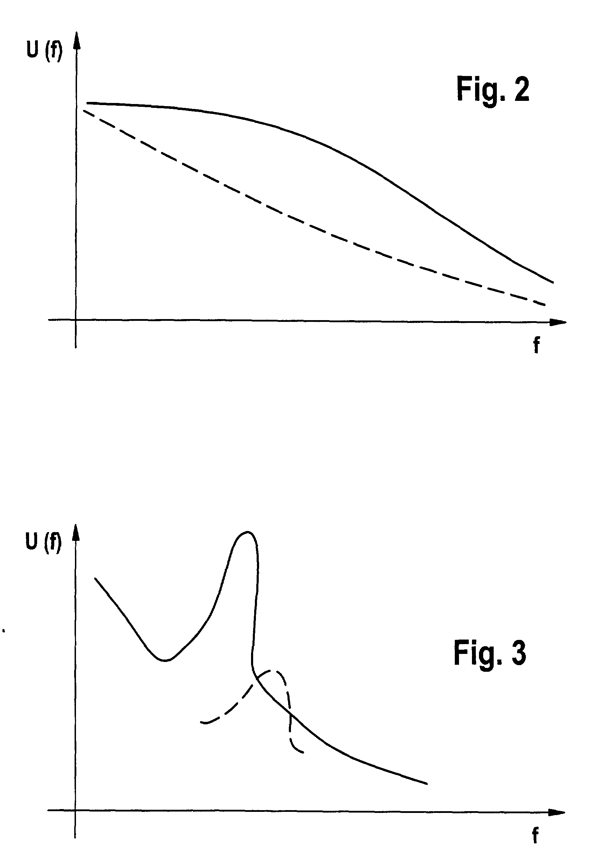

Fig. 2 zeigt eine Darstellung eines ersten Frequenzspektrums U(f). Die durchgezogene Kennlinie charakterisiert den Soll-Zustand, der zu Beginn der Messungen bzw. der Auswertungen bestimmt worden ist. Die gestrichelte Linie kennzeichnet den Ist-Zustand; sie gibt das Frequenzspektrum wieder, das sich aktuell nach einer Änderung einer System- und/oder Prozeßgröße eingestellt hat. Infolge der gravierenden Abweichungen zwischen den Ist- und den Soll-Meßdaten wird eine Meldung ausgegeben, die dem Bedienpersonal den aufgetretenen Fehler zur Kenntnis bringt.

Das in Fig. 3 dargestellte zweite Frequenzspektrum unterscheidet sich von dem ersten Frequenzspektrum in Fig. 2 durch das Auftreten eines markanten Peaks definierter Amplitude und definierter Lage. Wiederum kennzeichnet die durchgezogene Kennlinie den Soll-Zustand, während die gestrichelte Linie den Ist-Zustand darstellt. Ändert sich die Lage und/oder die Amplitude des Peaks während des laufenden Prozesses derart, daß entsprechend vorgegebene Toleranzwerte überschritten werden, so wird eine Fehlermeldung ausgegeben. Während im ersten Fall also eine Änderung in der Charakteristik des gesamten Frequenzspektrums zur System- und/oder Prozeßüberwachung herangezogen wird, wird gemäß der zweiten Variante zumindest ein markanter Bereich des Frequenzspektrums herausgegriffen und auf Änderungen hin überwacht.

### Bezugszeichenliste

- 1: erfindungsgemäße Vorrichtung
- 2: Meßrohr
- 3: Meßelektrode
- 4: Meßelektrode
- 5: Meßrohrachse
- 6: Meßmedium
- 7: Auswerte-/Regeieinheit
- 8: A/D Wandler
- 9: A/D Wandler

## Patentansprüche

1. Verfahren zur System- und Prozeßüberwachung bei einem magnetisch-induktiven Sensor, wobei ein Meßrohr von einem Medium im wesentlichen in Richtung der Meßrohrachse durchflossen wird, wobei ein Magnetfeld das Meßrohr im wesentlichen senkrecht zur Meßrohrachse durchsetzt, wobei in zumindest eine im wesentlichen senkrecht zur Meßrohrachse angeordneten Meßelektrode eine Meßspannung induziert wird und wobei die induzierte Meßspannung bzw. die Meßdaten Information über den Volumenstrom des Mediums in dem Meßrohr liefert bzw. liefern,
**dadurch gekennzeichnet,**
**daß** die Meßdaten über einen vorgegebenen Zeitraum bestimmt und gespeichert werden,
**daß** die Ist-Meßdaten mit vorgegebenen Soll-Meßdaten verglichen werden und
**daß** eine Meldung ausgegeben wird, wenn eine Abweichung zwischen den Ist-Meßdaten und den Soll-Meßdaten auftritt.

2. Verfahren nach Anspruch 1,
**dadurch gekennzeichnet,**
**daß** die Meldung nur dann ausgegeben wird, wenn die Ist-Meßdaten außerhalb vorgegebener Toleranzen um die Soll-Meßdaten liegen.

3. Verfahren nach Anspruch 1 oder 2,
**dadurch gekennzeichnet,**
**daß** das Frequenzspektrum (U(f)) der in die Meßelektrode induzierten Spannungswerte für die System- und oder Prozeßüberwachung herangezogen wird.

4. Verfahren nach Anspruch 1 oder 2,
**dadurch gekennzeichnet,**
**daß** ein zuvor bestimmtes markantes Muster der in die Meßelektrode induzierten Spannungswerte, beispielsweise ein zu einem gegebenen Zeitpunkt bzw. bei einer gegebenen Frequenz auftretender Peak, für die System- und oder Prozeßüberwachung herangezogen wird.

5. Vorrichtung zur System- und Prozeßüberwachung bei einem magnetisch-induktiven Sensor mit einem Meßrohr, einer Magnetanordnung, zumindest einer Meßelektrode und einer Auswerte-/Regeleinheit, wobei das Meßrohr von einem Meßmedium in Richtung der Meßrohrachse durchflossen wird, wobei die Magnetanordnung ein das Meßrohr durchsetzendes und im wesentlichen quer zur Meßrohrachse verlaufendes Magnetfeld erzeugt, wobei die zumindest eine Meßelektrode in einem seitlichen Bereich des Meßrohres angeordnet ist und galvanisch oder kapazitiv mit dem Meßmedium gekoppelt ist und wobei die Auswerte-/Regeleinheit Information über den Volumenstrom des Meßmediums in dem Meßrohr liefern,
**dadurch gekennzeichnet,**
**daß** die Auswerte-/Regeleinheit (7) Ist-Meßdaten über einen vorgegebenen Zeitraum bestimmt und speichert,
**daß** die Auswerte-/Regeleinheit (7) die Ist-Meßdaten mit vorgegebenen Soll-Meßdaten vergleicht und
**daß** die Auswerte-/Regeleinheit (7) die Ausgabe einer Meldung veranlaßt, wenn eine Abweichung zwischen den Ist-Meßdaten und den Soll-Meßdaten auftritt.
